# EUROPÄISCHE PATENTSCHRIFT

(11) **EP 2 543 548 B1**
(45) Veröffentlichungstag und Bekanntmachung des Hinweises auf die Patenterteilung: **24.12.2014**
(21) Anmeldenummer: 12175437.8
(22) Anmeldetag: 06.07.2012
(51) Int. Cl.: B60R 9/04

(54) **Befestigungssystem für einen Kraftfahrzeugdachträger**
Fixing system for a motor vehicle roof rack
Système de fixation pour un support de toit de véhicule

(30) Priorität: 06.07.2011 DE 102011051613
(43) Veröffentlichungstag der Anmeldung: 09.01.2013
(73) Patentinhaber: DURA Automotive Body & Glass Systems GmbH, 58840 Plettenberg (DE)
(72) Erfinder: Fürst, Klaus, 58511 Lüdenscheid (DE)
(74) Vertreter: Tersteegen, Felix

(56) Entgegenhaltungen:
- EP-A1- 1 504 963
- EP-A2- 0 805 068
- EP-B1- 1 794 031
- DE-A1- 3 626 926
- DE-A1- 19 528 899
- DE-A1- 19 534 044
- DE-A1- 19 910 034
- DE-C1- 4 418 528
- DE-U1- 8 910 936
- DE-U1-202011 005 653
- JP-A- 11 034 750
- US-A1- 2003 049 094

## Beschreibung

Die Erfindung betrifft einen Kraftfahrzeugdachträger und ein Befestigungssystem eines Kraftfahrzeugdachträgers mit einem einen Hohlraum ausbildenden Trägerteil, in dessen bei bestimmungsgemäßer Endmontage zum Fahrzeugdach gewandten Wandung eine Ausnehmung eingebracht ist, in die ein Montagekopf eines Befestigungselements einführbar ist, wobei bei bestimmungsgemäßer Endmontage des Kraftfahrzeugdachträgers der Montagekopf die Wandung des Trägerteils hintergreift, um das Trägerteil am Fahrzeugdach festzulegen.

Befestigungssysteme für Kraftfahrzeugdachträger dieser Art sind beispielsweise aus den Patentschriften EP 1 794 031 B1 und EP 1 362 743 B1 sowie von der als nächstliegenden gesehenen DE 3626926 A1 bekannt. Hierbei wird ein Trägerteil, das von einer bevorzugt einteilig ausgeführten Trägerleiste gebildet ist, über Befestigungselemente auf dem Fahrzeugdach festgelegt. Die Montageköpfe der Befestigungselemente, beispielsweise Nutensteine oder die Schenkel eines T-förmigen Befestigungselements, werden in Ausnehmungen, die in der Trägerleiste vorgesehen sind, eingeführt, so dass sie in den von der Trägerleiste gebildeten Hohlraum hineinragen und die Wandung der Trägerleiste innenseitig, also auf der von der Fahrzeugoberfläche abgewandten Seite der Wandung, hintergreifen.

Einen Kraftfahrzeugdachträger der eingangs genannten Art offenbart die Druckschrift DE 44 18 528 C1. Vergleichbare Kraftfahrzeugdachträger offenbaren außerdem auch die Druckschriften DE 20 2011005 653 U1 und DE 89 10 936 U.

Nachteilig an den im genannten Stand der Technik offenbarten Ausgestaltungen ist jedoch die entweder mangelnde oder aber aufwendige Vorfixierung des jeweiligen Montagekopfes des Befestigungselements an bzw. in der Trägerleiste in X und/oder Z-Richtung.

Der besseren Verständlichkeit halber sei erwähnt, dass, sofern nachfolgend von X-Richtung die Rede ist, die Fahrzeuglängsrichtung bzw. die Fahrtrichtung des Fahrzeugs bei Geradeausfahrt, mit Y-Richtung die Fahrzeugquerrichtung und mit Z-Richtung die zur Fahrbahn senkrechte Richtung gemeintist. Sofern von X, Y oder Z-Richtung mit Bezug auf die Trägerleiste oder auf das Befestigungselement die Rede ist, so bezieht sich dies stets auf die Trägerleiste im bestimmungsgemäßen Endmontagezustand am Fahrzeug.

Während bei der EP 1 794 031 B1 der Nutenstein zwecks Verdrehsicherung gegenüber der Trägerleiste insbesondere mit seitlichen Nuten und einem zusätzlichen Vorsprung recht aufwendig ausgestaltet ist, gewährleistet die offenbarte Ausgestaltung nicht die Möglichkeit, Nutensteine auch entfernt von den Beschnittenden der Trägerleiste anzuordnen. Denn um den Nutenstein einzuführen, ist dieser ausgehend von einer Öffnung am Anfang bzw. Ende der Trägerleiste und einer sich daran anschließenden, sich in X-Richtung erstreckenden Ausnehmung einzufädeln und an der Trägerleiste bis zu einem Anschlag entlangzuführen. Eine Anordnung im mittleren Abschnitt der Trägerleiste würde bedingen, dass die sich in X-Richtung erstreckende längliche Ausnehmung ausgehend von den Beschnittenden durchgängig sein müsste, was zwar grundsätzlich möglich, aber aufgrund der damit einhergehenden Schwächung der Leiste in Folge des Materialaustrags und aufgrund des Fertigungsaufwands nicht praktikabel wäre.

Weiter hat die in der EP 1 794 031 B1 offenbarte Lösung den Nachteil, dass die Befestigungselemente, sofern diese Nutensteine als Montageköpfe vorsehen, nicht vormontiert werden können, weil diese nicht an der Trägerleiste fixiert sind und beim Transport abfallen und verloren gehen oder zumindest ihre Position nicht halten würden.

Die EP 1 362 743 B1 hingegen offenbart ein T-förmiges Befestigungselement, das auch mittig in die Trägerleiste einzugreifen vermag, in dem dessen Schenkel durch eine in der Trägerleiste vorgesehene Ausnehmung nacheinander durchgesteckt werden. Allerdings erfordert das sich konzeptbedingt ergebende große Spiel in X-Richtung eine starre Vorabfixierung des T-förmigen Befestigungselements. Ansonsten besteht die Gefahr, dass das Befestigungselement bei Montage oder Transport herausfällt oder bei der Montage in einer Fehlstellung angesetzt wird, in der es die Wandung der TrägerLeiste nur an einer Seite der Ausnehmung bzw. mit nur einem Schenkel hintergreift.

Dem genannten Stand der Technik gemein ist darüber hinaus, dass zumindest dann, wenn die Montageköpfe der Befestigungselemente bei der Montage noch begrenzt in X-Richtung verschiebbar sein sollen, nur unzureichend gegen ein ungewolltes Eintauchen in das Hohlprofil gesichert sind. Bei Aufsetzen eines mit Befestigungselementen bestückten und daher montagefertigen Dachträgers auf das Fahrzeugdach sind die Befestigungselemente mit den im Fahrzeugdach vorgesehenen Montagelöchern in Überdeckung zu bringen, so dass die Befestigungselemente, beispielsweise Stehbolzen, durch das Fahrzeugdach hindurchtauchen können. Bei diesem Vorgang werden die Befestigungselemente bei einem nur geringfügig schiefen Ansetzen regelmäßig außer Position geraten, insbesondere werden die Montageköpfe in das Hohlprofil hineingedrückt.

Aufgabe der Erfindung ist es daher, ein Befestigungssystem für Kraftfahrzeugdachträger zur Verfügung zu stellen, mit der die Montage des Dachträgers vereinfacht ist. Dabei soll das Befestigungssystem konstruktiv einfach aufgebaut und preiswert zu fertigen sein sowie mit wenigen Bauteilen auskommen. Außerdem ist angestrebt, dass Befestigungssystem derart zu gestalten, dass der Dachträger vormontiert werden kann.

Diese Aufgaben werden nach der Erfindung dadurch gelöst, dass eine am Trägerteil angeordnete Rückhalteeinrichtung, die einer den Montagekopf in X-Richtung drückenden Kraft unter Gewährleistung des Erhalts einer begrenzten Verschiebbarkeit in X-Richtung entgegenzuwirken vermag, von einer Zwischenlage gebildet ist, in die Schlitze oder schlitzartige Öffnungen eingebracht sind, durch die hindurch der Montagekopf in die Ausnehmung einführbar ist und durch die das Befestigungselement bei bestimmungsgemäßer Endmontage hindurchragt, wobei die Schlitze oder schlitzartigen Öffnungen das jeweilige Befestigungselement im vormontierten Zustand in X-Richtung verschiebbar zu fixieren vermögen, wobei als X-Richtung die Fahrzeuglängsrichtung und die Fahrtrichtung des Fahrzeugs bei Geradeausfahrt definiert wird, wenn der Kraftfahrzeugdachträger auf dem Fahrzeugdach montiert ist.

Diese in X-Richtung wirkende Rückhalteeinrichtung, die von einer Zwischenlage gebildet ist, in die Ausnehmungen oder Schlitze eingebracht sind, durch die das Befestigungselement vor bestimmungsgemäßer Endmontage hindurchragt und durch die das Befestigungselement zumindest in X-Richtung reibungsbedingt in Position gehalten ist, ist bevorzugt ein Streifen aus solidem oder geschäumten Weichkunststoff, der neben der Rückhaltefunktion bei einer vorteilhaften Ausgestaltung außerdem auch die Abdichtung des sich zwischen Trägerteilunterseite und Karosserieaußenhaut ergebenden Spalts übernimmt. Gleichzeitig kann ein solches Unterlegeband bei entsprechender Dimensionierung dazu dienen, den sich zwischen den unteren seitlichen Kanten des Trägerteils und dem Karosserieblech ergebenden Spalt optisch zu überbrücken. Die Ausnehmung oder Schlitzung in der elastischen Zwischenlage ist derart dimensioniert, dass sich die zum Befestigungselement weisenden Kanten der Ausnehmung oder des Schlitzes elastisch an das Befestigungselement anlegen und dieses gegen Verrutschen in X-Richtung sichern.

Zusätzlich kann eine weitere, am Montagekopf oder am Befestigungselement angeordnete Rückhalteeinrichtung vorgesehen sein, die schon im vormontierten Zustand des Befestigungselements einer den Montagekopf in Z-Richtung drückenden Kraft entgegenzuwirken vermag. Diese Ausgestaltung verhindert insbesondere dann, wenn das Trägerteil im Bereich der Ausnehmung in Z-Richtung eine Höhe H₁ und der Montagekopf in Z-Richtung eine gegenüber der Höhe H₁ wesentlich kleinere Höhe h₂ aufweist, dass der Montagekopf zum Beispiel beim Aufsetzen des Trägerteils auf das Fahrzeugdach oder beim Ansetzen eines in den Montagekopf einzudrehenden Schraubenbolzens dauerhaft in Z-Richtung verschoben werden kann. Die Höhe h₂ ist dann wesentlich kleiner als die Höhe H₁, wenn der Montagekopf des Befestigungsmittels aufgrund seiner Höhe h₂ ohne die Rückhalteeinrichtung so weit in das Trägerteil hineingedrückt zu werden droht, dass das Befestigungsmittel oder der Montagekopf seine zur Montage erforderliche, vormontierte Position verlieren würde.

Die in X-Richtung wirkende Rückhalteeinrichtung ermöglicht nicht nur die Vorfixierung des Befestigungselements am Trägerteil sondern auch die zumindest begrenzte Verschiebung des Befestigungselements in X-Richtung zum Ausgleich von Toleranzen oder zum Beispiel beim Transport aufgetretenen leichten Lageverschiebungen bei der Montage.

Es kann eine einzige Rückhalteeinrichtung vorgesehen sein, die die Aufgabe, einer auf das Befestigungselement wirkenden Kraft in X- und in Z-Richtung entgegenzuwirken, übernimmt. Es können aber auch zwei Rückhalteeinrichtungen vorgesehen sein, von denen die eine in X- und die andere in Z-Richtung wirkt.

Bevorzugt ist vorgesehen, dass die in Z-Richtung wirkende weitere Rückhalteeinrichtung integral und insbesondere werkstoffeinstückig mit dem Trägerteil ausgebildet ist. Als besonders vorteilhaft wird angesehen, wenn das Trägerteil als in Z-Richtung wirkende Rückhalteeinrichtung einen in den von ihm gebildeten Hohlraum hineinragenden Rückhaltesteg aufweist. Das Trägerteil ist bevorzugt als Strangpressprofil ausgebildet und der Rückhaltesteg ragt als ein zum Profilquerschnitt gehörender Steg in den Hohlraum hinein und überragt zumindest einen Teil des Montagekopfes, um dessen Verschiebbarkeit in Z-Richtung zu begrenzen.

Alternativ oder auch zusätzlich kann am Montagekopf eine Rückhalteeinrichtung vorgesehen sein, die den Montagekopf nach dessen Einführen durch die Ausnehmung im Trägerteil in Z-Richtung abstützt. Eine solche Rückhalteeinrichtung kann insbesondere von einer federnden oder elastischen Rückstelleinrichtung gebildet sein. Der Montagekopf, der bevorzugt schon im vormontierten Zustand die bei Endmontage der Fahrzeugaußenhaut zugewandte Wandung des Trägerteils hintergreift, wird durch eine solche Rückstelleinrichtung innenseitig gegen die Wandung des Trägerteils angestellt. Die hierdurch hervorgerufene erhöhte Reibungskraft verhindert einerseits, dass der Montagekopf ungewollt in X-Richtung verrutscht, behindert aber andererseits bei richtiger Auslegung der Anstellkraft eine gewollte Verschiebung in X-Richtung, die regelmäßig zur ordnungsgemäßen Positionierung Befestigungsmittels erforderlich ist, nicht. Gleichzeitig würde die Anstellkraft trotz einer gewissen Nachgiebigkeit des Systems verhindern, dass der Montagekopf bei der Montage derart in den vom Trägerteil gebildeten Hohlraum hineingedrückt werden könnte, dass das Befestigungsmittel seine für die einwandfreie Montage erforderliche Position verlieren würde.

Als bevorzugt wird eine Ausgestaltung des Befestigungssystems eines Fahrzeugdachträgers angesehen, bei der der Montagekopf in einer ersten Ausrichtung durch die Ausnehmung hindurchgesteckt werden kann und in einer von der ersten Ausrichtung verschiedenen zweiten Ausrichtung, insbesondere nach einer Drehung um die bei bestimmungsgemäßer Montage im Wesentlichen in Z-Richtung weisende Hochachse des Befestigungselements, die nach Endmontage dem Fahrzeugdach zugewandte Wandung des Trägerteil innenseitig hintergreift. Diese Ausgestaltung hat den besonderen Vorteil, dass zum Beispiel ein als Nutenstein ausgebildeter Montagekopf ohne weiteres auch im mittleren Teil einer den Fahrzeugdachträger bildenden Profilleiste zum Einsatz kommen kann. Denn bei dieser Ausgestaltung ist die Notwendigkeit, den Nutenstein ausgehend vom Beschnittende in eine zum Beschnittende hin offene Ausnehmung einschieben zu können, hinfällig.

Vorteilhafter Weise dienen bei der vorstehend beschriebenen Ausgestaltung die Seitenflanken des Montagekopfs als Verdrehsicherung, in dem diese sich in der zweiten Ausrichtung gegen Steg- oder Wandungsbereiche im Inneren des Trägerteils abstützen. Diese Abstützung sollte dabei an den Seitenflanken des Montagekopfs und demnach auch an den der Abstützung des Drehmoments dienenden Steg- oder Wandungsbereichen eine derart geringe Flächenpressung verursachen, dass eine Beschädigung des Trägerteils oder gar eine äußerlich erkennbare Ausbeulung des Trägerteils sicher vermieden ist.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigen
Fig. 1 einen Querschnitt durch eine erste Ausgestaltung eines Trägerteils,
Fig. 2 einen Querschnitt durch eine zweite Ausgestaltung eines Trägerteils, und
Fig. 3 bis Fig. 5b das Vormontieren eines Befestigungselements.

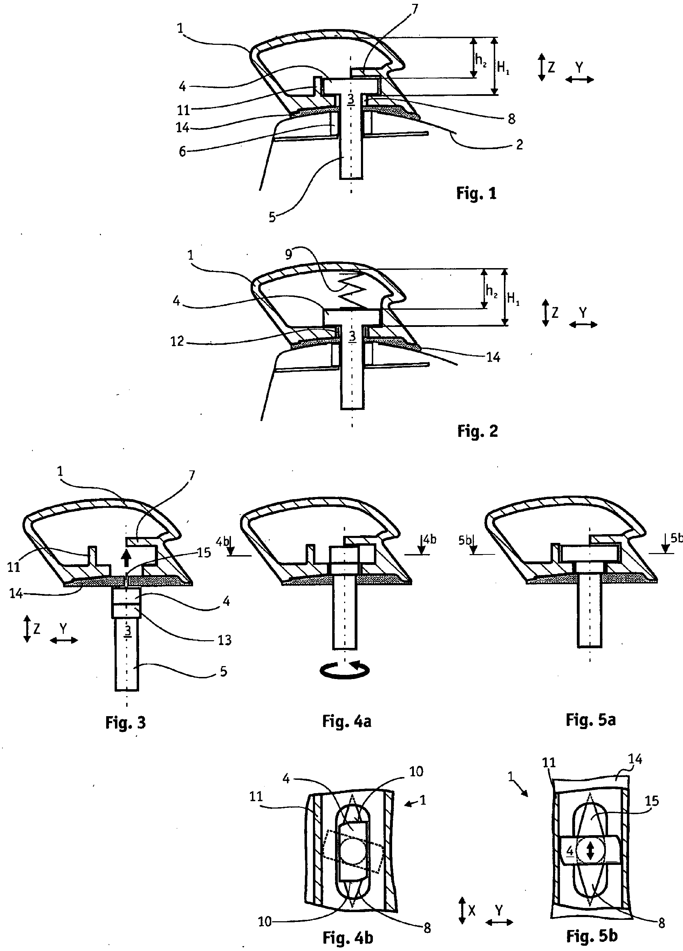

In Figur 1 ist eine erste Ausgestaltung eines Trägerteils 1 eines Kraftfahrzeugdachträgers im Querschnitt gezeigt. Bevorzugt handelt es sich um eine einteilig ausgeführte Trägerleiste, insbesondere einer aus einem Strangpressprofil oder einer im Innenhochdruckverfahren hergestellten Trägerleiste, die durch nachträgliches Biegen, Nachbearbeiten und Beschneiden der Profilenden, an die Fahrzeugkarosserieaußenhaut angepasst wird. Das Trägerteil ist in Z- und Y-Richtung umseitig geschlossenen und bildet daher einen Hohlraum aus, der insbesondere dann, wenn das Trägerteil als sich in X-Richtung erstreckende längliche Profilleiste ausgebildet ist, zu Montagezwecken mit Werkzeugen weitgehend unzugänglich ist.

Das Trägerteil 1 liegt auf der Fahrzeugkarosserieaußenhaut 2 auf und wird durch ein Befestigungselement 3, an dessen oberen Ende ein Montagekopf 4 vorgesehen ist, am Fahrzeug festgelegt. Das Befestigungselement 3 ist in den Figuren beispielhaft von einer einteilig ausgeführten Hammerkopfschraube gebildet, könnte aber auch aus einem separaten Nutenstein mit später eingeschraubtem Stehbolzen oder einer ähnlichen Konstruktion bestehen. Der Schraubenbolzen 5 ragt durch ein Distanzstück 6, welches beim Festziehen des Trägerteils 1 auf die Karosserie eine ungewollte Verformung der Karosserie verhindert.

Der Montagekopf 4 wird oberseitig von einem Rückhaltesteg 7 überragt, der als Rückhalteeinrichtung integral mit dem aus einem Strangpressprofil bestehenden Trägerteil 1 ausgebildet ist. Der Rückhaltesteg 7 verhindert, dass das Befestigungselement 3 mit dem Montagekopf 4 beim Ansetzen des Fahrzeugdachträgers in den vom Trägerteil 1 gebildeten Hohlraum hineingedrückt werden kann und so seine bei der Vormontage gezielt vorgenommene Positionierung ungewollt wieder verliert. Diese Gefahr besteht hier insbesondere deshalb, weil das Trägerteil im Bereich der Ausnehmung 8 in Z-Richtung eine Höhe H₁ und der Montagekopf in Z-Richtung eine gegenüber der Höhe H₁ wesentlich kleinere Höhe h₂ aufweist.

Zwischen dem Trägerteil 1 und der Karosserieaußenhaut 2 ist eine Zwischenlage 14 angeordnet, die neben einer Abdichtfunktion auch die Funktion hat, den Spalt zwischen den seitlichen Körperkanten des Trägerteils 1 und der Karosserieaußenhaut 2 optisch zu überbrücken.

Figur 2 zeigt eine alternative Ausgestaltung einer Rückhalteeinrichtung für das Befestigungselements 3 mit Montagekopf 4. Dabei ist oberhalb des Montagekopfs 4 eine Rückhalteeinrichtung in Form eines Federelements 9 angeordnet. Das Federelement 9 ist bewusst nur schematisch als Schraubenfeder dargestellt. Neben Schraubenfedern kommen auch zahlreiche andere Möglichkeiten in Betracht. So können beispielsweise am Montagekopf befestigte Federelemente, beispielsweise Federbleche, die sich innerhalb des Trägerteils oder am Rand der Ausnehmung 8 abstützen, verwendet werden. Oder am Montagekopf 4 wird ein elastisches Material, beispielsweise ein Schaumstoff oder Ähnliches angeordnet. Insgesamt hat eine solche Ausgestaltung der Vorteil, dass durch die von der Rückhalteeinrichtung auf den Montagekopf bzw. auf das Befestigungselement ausgeübte Anstellkraft einerseits die gewünschte Positionierung in Z-Richtung gewährleistet, andererseits aber auch eine Fixierung in X-Richtung ermöglicht. Insbesondere sorgt die von der Rückhalteeinrichtung zusätzlich zur Positionierung in Z-Richtung erzeugte und einer Verschiebung in X-Richtung entgegenwirkende Reibungskraft dafür, dass der Montagekopf bzw. das Befestigungselement mit Montagekopf bei Transport und Montage nicht verrutschen kann, ohne dabei den Montagekopf endgültig in X-Richtung festzulegen. Nachträgliche Korrekturen bei der Montage am Fahrzeug bleiben daher möglich.

Figuren 3 bis 5 zeigen das Einsetzen des Befestigungselements 3 in den Hohlraum des Trägerteils 1. Dabei wird der Montagekopf 4 ein einer ersten Ausrichtung in das Trägerteil 1 in Z-Richtung eingeführt (Figur 3) bis es am der Rückhaltesteg 7 anstößt (Figur 4a). Sodann wird es - bevorzugt entsprechend der Richtung, in der das Anzugsmoment beim späteren Festziehen des Trägerteils abzustützen ist - um die eigene Hochachse gedreht (Figur 4a), so dass im Anschluss der Montagekopf die Wandung des Trägerteils seitlich der Ausnehmung 8 übergreift (Figur 5a). Figur 4b bzw. Figur 5b zeigen dabei den in Figur 4a bzw. Figur 5a angedeuteten Schnitt A - A, der deutlich macht, dass der Montagekopf 4 in einer ersten Ausrichtung durch die Ausnehmung 8 hindurchgeführt werden kann (Figur 4b) und in einer zweiten Ausrichtung, die der Endmontageposition entspricht, die Wandung des Trägerteils 1 seitlich der Ausnehmung 8 übergreift (Figur 5b). Der Doppelpfeil in Figur 5b verdeutlicht, dass nach Überführung des Montagekopfs in die zweite Ausrichtung eine Verschiebung in X-Richtung nach wie vor möglich bleibt.

Aus den Figuren 4b und 5b ebenfalls ersichtlich ist, dass die seitlichen Stützflanken 10 am Montagekopf 4 derart ausgebildet sind, dass sie in der Endmontageposition an Innenseiten des Trägerteils anliegen, um das bei der Endmontage auftretende Drehmoment abstützen zu können. Die erforderliche Verdrehsicherung ist also durch eine Abstimmung der Profilgeometrie von Montagekopf und innerer Profilgeometrie des Trägerteils erreicht. Die Ausbildung der Flanken des Montagekopfs 4 gewährleistet dabei, dass dieser in die zweite Ausrichtung überführt werden kann, ohne vorher mit den Innenseiten des Trägerteils zu kollidieren. Hierzu sind beispielhaft die seitlichen Flanken des Montagekopfes in den Figuren 4b und 5b an den vorauseilenden Ecken abgerundet. Es können aber auch andere Formen, die dieselbe oder eine ähnliche Funktion gewährleisten, zum Einsatz kommen. Insbesondere ist die Verwendung eines Montagekopfs in der Form eines Parallelogramm denkbar, bei dem die Stützflanken des paraLLelogrammförmigen Montagekopfs in der zweiten Ausrichtung parallel zu den Innenseiten des Trägerteils, an denen sie sich abstützen, ausgerichtet sind, um sich mit möglichst geringer Flächenpressung daran abzustützen.

Die Breite des Montagekopfes und insbesondere das Verhältnis von Breite zu Länge des Montagekopfes wird der Fachmann an die konstruktiven Gegebenheiten und die im Belastungsfall auftretenden Kräfte anzupassen wissen.

Ein weiter Aspekt des Befestigungssystems betrifft die Zentrierung des Montagekopfs 4 bzw. die des Befestigungsmittels beim Anziehen des Trägerteils auf die Karosserie.

In Figur 1 ist im Inneren des Trägerteils 1 ein zusätzlicher Stützsteg 11 vorgesehen. Die Ausnehmung 8 ist dabei so angeordnet, dass diese bzw. deren Mittelpunkt oder Mittellinie sich in Y-Richtung gesehen mittig zwischen den beiden inneren Stützflächen des Trägerteils befindet, an denen sich der Montagekopf bei der Montage abstützt. Dies gewährleistet, dass das Befestigungselement 3 sich bei der Montage nicht seitlich verzieht, was gegebenenfalls zu einer Fehlausrichtung des Trägerteils führen könnte. Da ein zusätzlicher Stützsteg in Figur 2 fehlt, ist dort ein Zentrierring 12 vorgesehen, der ein seitliches Verziehen des Befestigungselements verhindert. Dieser Zentrierring 12 kann, wie in Figur 2 gezeigt, als separates, einzelnes Bauteil vorgesehen sein, kann aber auch zusammen mit dem Distanzstück 6 ausgebildet sein. Eine weitere Alternative zur Zentrierung des Montagekopfes 4 oder des BefestigungseLements 3 verdeutlichen die Figuren 3 bis 5b, in denen der im Endmontagezustand durch die Ausnehmung 8 hindurchragende Teil des Montagekopfs 4 bzw. des Befestigungselements 3 einen an die Breite der Ausnehmung 8 angepassten Zentrierabschnitt 13 aufweist. Wie Figuren 3 bis 5 zeigen, können auch mehrere Varianten zur Zentrierung des Montagekopfs gleichzeitig zum Einsatz kommen.

Ebenfalls in den Figuren 3 bis 5b verdeutlicht ist die weitere Funktion der Zwischenlage 14, die als in X-Richtung wirkende Rückhalteinrichtung dient. Der Montagekopf 4 wird durch eine Ausnehmung bzw. einen Schlitz 15 in der Zwischenlage 14 hindurchgesteckt (Figur 3), wodurch sich die dem Befestigungselement 3 zugewandten Kanten des Schlitzes 15 eng an das Befestigungselement 3 anlegen und dieses in X-Richtung sowie gegen ein unerwünschte Verdrehen zum Beispiel beim Transport fixieren. Selbstverständlich ist es auch möglich, das Befestigungselement anders als in den Figuren gezeigt von oben durch den Schlitz 15 einzuführen und anschließend den Montagekopf 4 durch die im Trägerteil 1 vorgesehene Ausnehmung 8 einzusetzen.

Die Zwischenlage 14 ist bevorzugt von einem komprimierbaren Schaumstoffstreifen gebildet, der gleichzeitig zur Abdichtung der Karosserie und zur optischen Spaltabdeckung dient. Die Zwischenlage hält das Befestigungselement bei der Fahrzeugendmontage und beim Transport in Position und stellt die Verschiebbarkeit des Befestigungselements in X-Richtung sicher.

Generell sei angeführt, dass die in den Figuren jeweils beispielhaft gezeigten, speziellen Ausgestaltungen auch miteinander kombiniert werden können und sich - je nach konkretem Anwendungsfall- sinnvoll ergänzen können.

### Bezugszeichenliste

- 1: Trägerteil
- 2: Fahrzeugkarosserieaußenhaut
- 3: Befestigungselement
- 4: Montagekopf
- 5: Schraubenbolzen
- 6: Distanzstück
- 7: Rückhaltesteg
- 8: Ausnehmung
- 9: Federelement
- 10: Stützflanken
- 11: Stützsteg
- 12: Zentrierring
- 13: Zentrierabschnitt
- 14: Zwischenlage
- 15: Schlitz

## Patentansprüche

1. Kraftfahrzeugdachträger mit einem Trägerteil (1), in dessen bei bestimmungsgemäßer Endmontage zum Fahrzeugdach (2) gewandten Wandung eine Ausnehmung (8) eingebracht ist, in die ein Montagekopf (4) eines Befestigungselements (3) einführbar ist, wobei bei bestimmungsgemäßer Endmontage des Kraftfahrzeugdachträgers der Montagekopf (4) die Wandung des Trägerteils (1) zu hintergreifen vermag, um das Trägerteil (1) am Fahrzeugdach (2) festzulegen, **dadurch gekennzeichnet, dass**
eine am Trägerteil (1) angeordnete Rückhalteeinrichtung (14), die einer den Montagekopf (4) in X-Richtung drückenden Kraft unter Gewährleistung des Erhalts einer begrenzten Verschiebbarkeit in X-Richtung entgegenzuwirken vermag, von einer Zwischenlage (14) gebildet ist, in die Schlitze oder schlitzartige Öffnungen (15) eingebracht sind, durch die hindurch der Montagekopf (4) in die Ausnehmung (8) einführbar ist und durch die das Befestigungselement (3) bei bestimmungsgemäßer Endmontage hindurchragt, wobei die Schlitze oder schlitzartigen Öffnungen (15) das Befestigungselement (3) im vormontierten Zustand in X-Richtung verschiebbar zu fixieren vermögen, wobei als X-Richtung die Fahrzeuglängsrichtung und die Fahrtrichtung bei Geradeausfahrt des Fahrzeugs definiert wird, wenn der Kraftfahrzeugdachträger auf dem Fahrzeugdach montiert ist.

2. Kraftfahrzeugdachträger nach Anspruch 1, **dadurch gekennzeichnet, dass** eine weitere, in Z-Richtung wirkende Rückhalteeinrichtung (7,9) vorgesehen ist, die schon bei vormontiertem Montagekopf einer den Montagekopf einer den Montagekopf (4) in Z-Richtung druckenden Kraft entgegenzuwirken vermag, wobei die weitere Rückhalteeinrichtung integral mit dem Trägerteil (1) ausgebildet ist, wobei mit z-Richtung die zur Fahrbahn senkrechte Richtung gemeintist.

3. Kraftfahrzeugdachträger nach dem vorhergehenden Anspruch, **dadurch gekennzeichnet, dass** das Trägerteil (1) als weitere Rückhalteeinrichtung einen in das Innere des Trägerteils (1) hineinragenden Rückhaltesteg (7) aufweist.

4. Kraftfahrzeugdachträger nach einem der vorhergehenden Ansprüche, **dadurch gekennzeichnet, dass** die Zwischenlage (14) ein Streifen aus Weichkunststoffist.

5. Kraftfahrzeugdachträger nach dem vorhergehenden Anspruch, **dadurch gekennzeichnet, dass** die Zwischenlage eine Spaltabdichtung und/oder eine optische Spaltüberbrückung für einen zwischen Trägerteilunterseite und Karosserieaußenhaut des Kraftfahrzeugs bestehenden Spalt bildet.

6. Befestigungssystem mit einem Kraftfahrzeugdachträger nach einem der vorhergehenden Ansprüche und einem Befestigungselement (3) mit einem Montagekopf (4), **dadurch gekennzeichnet, dass** der Montagekopf (4) und die Ausnehmung (8) derart aufeinander abgestimmt sind, dass der Montagekopf (4) in einer ersten Ausrichtung durch die Ausnehmung (8) hindurchgesteckt werden kann und in einer von der ersten Ausrichtung verschiedenen zweiten Ausrichtung, die zur Fahrzeugkarosserie gewandte Wandung des Trägerteils (1) innenseitig hintergreift.

7. Befestigungssystem nach dem vorhergehenden Anspruch, **dadurch gekennzeichnet, dass** seitliche Stützflanken (10) des Montagekopfs (4) als Verdrehsicherung dienen, indem diese sich in der zweiten Ausrichtung gegen Steg- oder Wandungsbereiche im Inneren des Trägerteils (1) abstützen.

8. Befestigungssystem mit einem Kraftfahrzeugdachträger nach einem der Ansprüche 1 bis 5 und mit einem einen Montagekopf (4) aufweisenden Befestigungselement (3), **dadurch gekennzeichnet, dass** das Befestigungselement (3) durch die in die Zwischenlage (14) eingebrachten Schlitze (15) oder schlitzartigen Öffnungen hindurchragt, wobei die Schlitze oder schlitzartigen Öffnungen (15) das Befestigungselement (3) im vormonierten Zustand in X-Richtung verschiebbar fixieren, indem sich die zum Befestigungselement (3) weisenden Kanten der schlitzartigen Öffnung oder des Schlitzes (15) elastisch an das Befestigungselement (3) anlegen.

## Claims

1. A motor vehicle roof rack with a carrier part (1), which when installed in accordance with regulations, has a recess (8) provided in its wall facing the vehicle roof (2), into which recess a mounting head (4) of a fixing element (3) can be inserted, wherein when the motor vehicle roof rack undergoes final assembly in accordance with regulations, the mounting head (4) is able to engage behind the wall of the carrier part (1) in order to fix the carrier part (1) to the vehicle roof (2), **characterised in that** a retaining means (14) arranged on the carrier part (1), which is able to counteract a force pushing the mounting head (4) in X-direction whilst ensuring that a limited movability in X-direction is maintained, is formed by an intermediate layer (14), in which slots or slot-like openings (15) are provided, through which the mounting head (4) can be inserted into the recess (8), and through which when properly installed, the fixing element (3) protrudes, wherein the slots or slot-like openings (15) are able to slideably fix the fixing element (3) when pre-assembled in X-direction, wherein X-direction denotes the longitudinal direction of the vehicle and the driving direction, when the vehicle is driving straight ahead with the motor vehicle roof rack mounted on the roof.

2. The motor vehicle roof rack according to claim 1, **characterised in that** a further retaining means (7, 9) acting in Z-direction is provided which is able, for a pre-assembled mounting head, to counteract a force pushing the mounting head (4) in Z-direction, wherein the further retaining means is integrated with the carrier part (1), wherein Z-direction denotes the direction perpendicular to the carriageway.

3. The motor vehicle roof rack according to the preceding claim, **characterised in that** the carrier part (1) comprises a retaining web (7) as a further retaining means, which protrudes into the inside of the carrier part (1).

4. The motor vehicle roof rack according to one of the preceding claims, **characterised in that** the intermediate layer (14) is a strip of soft plastic.

5. The motor vehicle roof rack according to the preceding claim, **characterised in that** the intermediate layer forms a gap-sealing and/or an optical gap-bridging for a gap existing between the underside of the carrier part and the outer skin of the body work.

6. Fixing system with a motor vehicle roof rack according to one of the preceding claims and a fixing element (3) with a mounting head (4), **characterised in that** the mounting head (4) and the recess (8) are coordinated with each other in such a way that the mounting head (4), in a first alignment, can be pushed through the recess (8), and in a second alignment different from the first alignment, engages on the inside behind the wall of the carrier part (1) facing the vehicle body.

7. The fixing system according to the preceding claim, **characterised in that** the lateral supporting flanks (10) of the mounting head (4) serve as an anti-rotation lock **in that** they are supported, in the second alignment, against web or wall areas inside the carrier part (1).

8. The fixing system with a motor vehicle roof rack according to one of claims 1 to 5 with a fixing element (3) comprising a mounting head (4), **characterised in that** the fixing element (3) protrudes through the slots (15) or slot-like openings provided in the intermediate layer (14), wherein the slots or slot-like openings (15) slideably fix the fixing element (3) when pre-assembled, in X-direction, **in that** the edges of the slot-like opening or of the slot (15) elastically come to rest against the fixing element (3).

## Revendications

1. Galerie de toit pour véhicules automobiles avec une partie de support (1), dont la paroi tournée vers le toit du véhicule (2) dans l'état de montage final conforme comporte un évidement (8) dans lequel peut être insérée une tête de montage (4) d'un élément de fixation (3), sachant que dans l'état de montage final conforme de la galerie de toit pour véhicules automobiles, la tête de montage (4) est capable de vernir en prise derrière la paroi de la partie de support (1), pour fixer la partie de support (1) sur le toit du véhicule (2), **caractérisée en ce que**
un dispositif de retenue (14) agencé sur la partie de support (1) et capable d'agir contre une force poussant la tête de montage (4) dans la direction X en assurant l'obtention d'un coulissement limité dans la direction X est constitué d'une couche intermédiaire (14) dans laquelle sont formées des fentes ou des ouvertures du genre fentes (15), à travers lesquelles la tête de montage (4) peut être insérée dans l'évidement (8) et à travers lesquelles passe l'élément de fixation (3) dans l'état de montage final conforme, sachant que les fentes ou les ouvertures du genre fentes (15) sont capables de fixer l'élément de fixation (3) dans l'état prémonté avec coulissement dans la direction X, sachant que la direction X est définie comme la direction longitudinale du véhicule et comme la direction de déplacement lors d'une circulation en ligne droite du véhicule, lorsque la galerie de toit pour véhicules automobiles est montée sur le toit du véhicule.

2. Galerie de toit pour véhicules automobiles selon la revendication 1, **caractérisée en ce qu'**il est prévu un autre dispositif de retenue (7, 9) agissant dans la direction Z, capable d'agir contre une force poussant la tête de montage (4) dans la direction Z dès l'état prémonté de la tête de montage, sachant que l'autre dispositif de retenue est conçu intégralement avec la partie de support (1), la direction Z étant la direction perpendiculaire à la voie de circulation.

3. Galerie de toit pour véhicules automobiles selon la revendication précédente, **caractérisée en ce que** la partie de support (1) comporte une tige de retenue (7) insérée à l'intérieur de la partie de support (1) en tant qu'autre dispositif de retenue.

4. Galerie de toit pour véhicules automobiles selon l'une des revendications précédentes, **caractérisée en ce que** la couche intermédiaire (14) est une bande de plastique souple.

5. Galerie de toit pour véhicules automobiles selon la revendication précédente, **caractérisée en ce que** la couche intermédiaire forme un moyen d'étanchéité de fente et/ou un recouvrement visuel de fente pour une fente située entre le côté inférieur du support et l'enveloppe extérieure de la carrosserie du véhicule automobile.

6. Système de fixation avec une galerie de toit pour véhicules automobiles selon l'une des revendications précédentes et un élément de fixation (3) avec une tête de montage (4), **caractérisé en ce que** la tête de montage (4) et l'évidement (8) sont adaptés l'un à l'autre de manière à ce que la tête de montage (4) puisse être insérée à travers l'évidement (8) dans une première orientation et vienne en prise interne derrière la paroi de la partie de support (1) tournée vers la carrosserie du véhicule dans une deuxième orientation différente de la première orientation.

7. Système de fixation selon la revendication précédente, **caractérisé en ce que** des rebords d'appui latéraux (10) de la tête de montage (4) servent de sécurité anti-rotation, sachant que ceux-ci s'appuient contre des régions de tige ou de paroi à l''intérieur de la partie de support (1) dans la deuxième orientation.

8. Système de fixation avec une galerie de toit pour véhicules automobiles selon l'une des revendications 1 à 5 et avec un élément de fixation (3) comportant une tête de montage (4), **caractérisé en ce que** l'élément de fixation (3) passe à travers les fentes (15) ou les ouvertures du genre fentes prévues dans la couche intermédiaire (14), sachant que dans l'état prémonté, les fentes ou les ouvertures du genre fentes (15) fixent l'élément de fixation (3) de façon coulissante dans la direction X, sachant que les bords de l'ouverture du genre fente ou de la fente (15) orientés vers l'élément de fixation (3) s'appliquent élastiquement sur l'élément de fixation (3).
